Europäisches Patentamt

**European Patent Office**

Office européen des brevets

(19)

(11) Veröffentlichungsnummer: **0 042 517**
B1

(12)    **EUROPÄISCHE PATENTSCHRIFT**

(45) Veröffentlichungstag der Patentschrift:
25.04.84

(21) Anmeldenummer: 81104293.6

(22) Anmeldetag: 04.06.81

(51) Int. Cl.³: **B 01 D 13/04,** A 61 M 1/03,
C 08 L 1/02

(54) Verfahren zur Herstellung einer Dialysemembran aus Cellulose.

(30) Priorität: **12.06.80 DE 3021943**

(43) Veröffentlichungstag der Anmeldung:
**30.12.81 Patentblatt 81/52**

(45) Bekanntmachung des Hinweises auf die Patenterteilung:
**25.04.84 Patentblatt 84/17**

(84) Benannte Vertragsstaaten:
**AT BE CH FR GB IT LI LU NL SE**

(56) Entgegenhaltungen:
**EP - A - 0 001 047**
**FR - A - 2 355 540**
**FR - A - 2 423 559**
**GB - A - 1 028 461**
**GB - A - 1 144 759**
**GB - A - 2 001 320**
**GB - A - 2 022 117**

(73) Patentinhaber: **Akzo GmbH,**
**Postfach 10 01 49 Kasinostrasse 19-23,**
**D-5600 Wuppertal-1 (DE)**

(72) Erfinder: **Gerlach, Klaus, Dr. Dipl.-Chem.,**
**Friedenstrasse 30, D-8750 Aschaffenburg (DE)**
Erfinder: **Behnke, Joachim, Dr. Dipl.-Ing., In den**
**Weizenäckern 26, D-8762 Amorbach (DE)**
Erfinder: **Brandner, Alexander, Dr. Dipl.-Chem., Dr.**
**Jordan-strasse 12a, D-8765 Erlenbach (DE)**

BUNDESDRUCKEREI BERLIN

Verfahren zur Herstellung einer Dialysemembran aus Cellulose

Die Erfindung betrifft ein Verfahren zur Herstellung einer Dialysemembran aus regenerierter Cellulose in Form von Flachfolien, Schlauchfolien oder Hohlfäden.

Aus der CH-A-191 822 ist es bekannt, daß sich Cellulose in tertiärem Aminoxid lösen läßt, und daß sich die Cellulose durch Einbringen einer solchen Lösung in ein wäßriges Fällbad regenerieren läßt. Ein anderes Verfahren zum Lösen von Cellulose in tertiären Aminoxiden beschreibt die US-A-3 447 939.

Die DE-A-2 830 683, DE-A-2 830 684 und DE-A-2 830 685 beschreiben Verfahren zum Lösen von Cellulose in tertiärem Aminoxid, wobei N-Methyl-Morpholin bevorzugtes Aminoxid ist und das tertiäre Aminoxid gegebenenfalls nicht lösendes Verdünnungsmittel enthält.

Das erhaltene lagerfähige Produkt kann unmittelbar zum Extrudieren in ein Nichtlösungsmittel eingesetzt werden, wobei Folien oder Fäden aus regenerierter Cellulose entstehen.

Dialysemembranen aus regenerierter Cellulose in Form von Flachfolien, Schlauchfolien oder Hohlfäden sind seit längerem bekannt, wobei die Regeneration der Cellulose nach dem Cuoxam-Verfahren, nach dem Viskose-Verfahren oder durch Hydrolyse von Celluloseacetat erfolgen kann. Je nach dem angewendeten Verfahren und den Verfahrensbedingungen erhält man Membranen mit unterschiedlichen Dialyseeigenschaften, wie beispielsweise Ultrafiltrationsleistung, Permeabilität für verschiedene Molekülgrößen, Wasserrückhaltevermögen und unterschiedliche Verhältnisse mehrerer solcher Eigenschaften zueinander. Im allgemeinen steht die hydrodynamische Permeabilität in einem bestimmten Verhältnis zur diffusiven Permeabilität.

Beispielsweise in der DE-A-2 823 985 wird eine Cellulosemembran, die nach dem Cuoxamverfahren hergestellt ist, beansprucht, die eine größere hydrodynamische Permeabilität (Ultrafiltrationsleistung) aufweist, als sie sonst beim Cuoxam-Verfahren erzielt wird. Derartige Membranen spielen eine Rolle bei der Behandlung von unter Bluthochdruck leidenden Patienten, bei denen zur Reinfusion größerer Flüssigkeitsmengen in den menschlichen Blutkreislauf eine Membran mit erhöhter hydrodynamischer Permeabilität erwünscht ist, die gleichzeitig auch eine ausreichend hohe diffusive Permeabilität aufweist, wie sie von der nach dem Cuoxam-Verfahren regenerierten Cellulose erreicht wird.

Dialysemembranen aus regenerierter Cellulose, die nach dem Cuoxam-Verfahren regeneriert wurden, verlieren ihre dialytische Permeabilität bei Unterschreitung der Ultrafiltrationsleistung von $1 \cdot 10^{-4}$ ml/min N in so starkem Maße, daß sie als Membran für die Dialyse, insbesondere für die Hämodialyse nicht mehr brauchbar sind.

In der GB-A-1 144 759, die die Regeneration von Cellulose aus Spinnlösungen, die im wesentlichen aus Cellulose und tertiären Aminoxiden bestehen, beschreibt, wird auch die Verwendungsmöglichkeit der so regenerierten Cellulose zu Dialysemembranen erwähnt, ohne jedoch überhaupt die vielfältigen damit in Zusammenhang stehenden Probleme überhaupt anzuschneiden.

Aufgabe der vorliegenden Erfindung war die Schaffung einer Dialysemembran aus regenerierter Cellulose mit ausreichender Festigkeit und insbesondere mit bisher unbekannten Dialyseeigenschaften.

Gelöst wurde diese Aufgabe durch ein Verfahren der eingangs erwähnten Art, das dadurch gekennzeichnet ist, daß ein Gemisch aus 7 Gew.-% bis 25 Gew.-% Cellulose, 93 Gew.-% bis 50 Gew.-% tertiärem Aminoxid, gegebenenfalls bis 25 Gew.-% einem die Cellulose nicht lösenden Verdünnungsmittel und bis zu 10 Gew.-% üblichen Zusätzen, jeweils bezogen auf das Gewicht der Spinnlösung, in einem Mischorgan in weniger als 8 min und bei Temperaturen zwischen 80° und 150° C zur Lösung gebracht wird, daß man die Lösung entgast, durch eine Breitschlitzdüse, Ringschlitzdüse oder Hohlfadendüse in ein Fällbad extrudiert, wäscht und nach Zusatz von Weichmacher unter Schrumpfbehinderung bei Temperaturen zwischen 50° und 110° C trocknet und aufwickelt.

Die erfindungsgemäße Dialysemembran weist eine deutlich höhere Vitamin-B12-Permeabilität (gemessen bei 20° C) auf als die bisher bekannten Dialysemembranen aus regenerierter Cellulose. Insbesondere ist es von Vorteil, daß nunmehr Dialysemembranen zur Verfügung stehen, die auch dann noch eine erhebliche Vitamin-B12-Permeabilität aufweisen, wenn praktisch keine Ultrafiltrationsleistung mehr gemessen wird.

Hervorragende erfindungsgemäße Dialysemembranen sind solche, die ganz oder teilweise aus substituierter Cellulose bestehen, wobei der Substitutionsgrad der substituierten Cellulose vorzugsweise zwischen 0,1 und 0,7 liegt.

Substituierte Cellulosen, die im Rahmen der Erfindung zu guten Dialysemembranen mit der hohen Vitamin-B12-Permeabilität bei vergleichsweise geringer Ultrafiltrationsleistung führen, sind Carboxyalkylcellulose, alkylierte Cellulose, wie Methylcellulose, Äthylcellulose aber auch gemischt substituierte wie beispielsweise Hydroxypropyl-methyl-Cellulose.

Als tertiäre Aminoxide haben sich beispielsweise Triäthylaminoxid, Dimethylcyclohexylaminoxid, Dimethyläthanolaminoxid, Dimethylbenzylaminoxid, Methylpiperidinoxid, Methylpyrrolidinoxid, Pyridinoxid als geeignet erwiesen. Bevorzugt wird jedoch N-Methyl-Morpholin-N-oxid. Gegebenenfalls enthält die Spinnlösung 10 bis 25 Gew.-% eines die Cellulose nicht lösenden Verdünnungsmittels. Als Verdünnungsmittel kommen in Frage: Wasser, niedrige ein- und mehrwertige Alkohole, Dimethylformamid, Dimethylsulfoxid, höhersiedende Amine, insbesondere das zum tertiären Aminoxid korrespondierende Amin.

Ein Parameter, der die Ultrafiltrationsleistung in der Dialysemembran beeinflußt, ist die Konzentration der Cellulose in der Spinnlösung, wobei eine geringere Konzentration zu höheren Ultrafiltrationsleistungen führt. Höhere Cellulosekonzentrationen führen zu hohen Viskositäten, durch die die Verspinnbarkeit beeinträchtigt wird.

Gegebenenfalls werden der Spinnlösung bis zu 10 Gew.-% Zusätze beigemischt. Als solche kommen beispielsweise viskositätsbeeinflussende Zusätze, Stabilisatoren und/oder Weichmacher in Frage. Stabilisatoren verhindern einen zu großen Abbau im Polymerisationsgrad und andere Schädigungen, die sich in einer Verfärbung der regenerierten Cellulose auswirken. Bewährt haben sich hierzu bisher beispielsweise Citronensäure und/oder Glucose. Als Zusätze können auch anorganische und/oder organische Salze, die in der Spinnlösung löslich sind, eingesetzt werden, um dadurch beispielsweise die Porenstruktur zu beeinflussen.

Während bei den bisher bekannten Dialysemembranen als Cellulose stets eine hochwertige Cellulose mit hohem Polymerisationsgrad verwendet wurde, beispielsweise Baumwollinters, ist es bei der erfindungsgemäßen Dialysemembran ohne weiteres möglich auch Cellulosen mit einem geringeren Polymerisationsgrad einzusetzen. Aus toxikologischen Gründen muß lediglich sichergestellt sein, daß keine ins Blut übergehenden Substanzen in der Cellulose verbleiben, d. h. man sollte auf Harz- und Hemicellulosefreiheit achten.

Die Temperatur im Extruder sollte so hoch eingestellt werden, wie es der eingesetzte Cellulosetyp gerade noch zuläßt. Bei höherer Temperatur im Extruder kann die Verweilzeit verringert werden. Mit steigender Temperatur nimmt die Viskosität der Cellulose-Aminoxid-Mischung ab, so daß sich daraus Verarbeitungsvorteile ergeben, beispielsweise wird die Entgasung im Extruder erleichtert. Die Verringerung der Viskosität mit steigender Temperatur ermöglicht aber auch Cellulose-Aminoxid-Mischungen herzustellen, die eine höhere Cellulosekonzentration aufweisen. Die Verarbeitung von Mischungen mit höherer Cellulosekonzentration führt zu Membranen mit besonderen Eigenschaften, die eine geringere Ultrafiltrationsleistung mit hoher dialytischer Permeabilität für Vitamin B 12 verbinden.

Bis zu Temperaturen von 150°C ließ sich das Gemisch für die Spinnlösung noch ohne gravierende Schädigungen der Cellulose bearbeiten, besonders dann, wenn dem Gemisch beispielsweise 3% Citronensäure als Stabilisator zugesetzt waren. Die Arbeitstemperatur muß auf jeden Fall oberhalb der Schmelztemperatur des gewählten tertiären Aminoxids liegen. Durch Beimischungen an die Cellulose nicht lösenden Verdünnungsmitteln wird der Schmelzpunkt der meisten in Frage kommenden tertiären Aminoxide so weit gesenkt, daß Temperaturen um 80°C bereits ausreichen, um die Spinnlösung herzustellen.

Als Fällbad kommen solche Flüssigkeiten und Lösungen in Betracht, die mit dem tertiären Aminoxid mischbar sind. Hier sind Wasser, niedere ein- und mehrwertige Alkohole, Ketone, Amine und insbesondere wäßrige Lösungen zu nennen. Die genannten Stoffe können für sich oder im Gemisch untereinander eingesetzt werden. Zur Beeinflussung der Koagulation enthält das Fällbad in bevorzugter Weise 1 Gew.-% bis 25 Gew.-% tertiäres Aminoxid.

Gegebenenfalls können dem Fällbad Salze, wie beispielsweise Natriumsulfat oder Natriumacetat zugesetzt sein, um die Quellung der regenerierten Cellulose bei der Koagulation zu begrenzen.

Im allgemeinen beträgt die Fällbadtemperatur Raumtemperatur. Höhere Fällbadtemperaturen sollten vermieden werden, um eine Verringerung der Dialyseleistungen der Membran zu vermeiden.

Unter den genannten Bedingungen reicht in den meisten Fällen eine Verweilzeit im Fällbad von 2 min aus. Das Auswaschen der Reste an tertiärem Aminoxid und gegebenenfalls von Zusätzen erfolgt in üblicher Weise im Gegenstrom mit Wasser von 12° bis 40°C und erfordert eine Verweilzeit von höchstens 2 bis 4 min.

Um einer Verhornung und Versprödung beim Trocknen entgegenzuwirken, wird der ausgewaschenen und noch nassen Dialysemembran ein Weichmacher zugegeben. Dies kann durch Eintauchen in eine wäßrige und/oder alkoholische Lösung eines Weichmachers oder Aufsprühen oder Aufdrucken einer solchen Lösung erfolgen. Für Zwecke der Hämodialyse kommen im allgemeinen nur solche Verbindungen in Frage, die toxikologisch ohne Einschränkung Verwendung finden können. Als geeignet haben sich erwiesen: Glyzerin, Polyäthylenglykole, 1,3-Butandiol, Glucose und Gemische der genannten Substanzen.

Die erhaltenen erfindungsgemäßen Dialysemembranen werden bei Temperaturen zwischen 50° und 110°C in ähnlicher Weise getrocknet, wie es von anderen Dialysemembranen aus regenerierter Cellulose bekannt ist. Geeignet sind dazu Walzentrockner, Bandtrockner oder andere Trocknertypen, die gewährleisten, daß die Trocknung unter Schrumpfbehinderung erfolgt. Unter Schrumpfbehinderung soll verstanden sein, daß Maßnahmen getroffen werden, die eine Dimensionsverringerung in Längs- und Querrichtung weitgehend ausschließen. Eine Verringerung in der Dicke ist zulässig. Im allgemeinen beginnt man die Trocknung bei höherer Temperatur und verringert sie gegen Ende der Trockenstrecke.

In einer besonderen Ausführungsform der Erfindung wird das Gemisch für die Spinnlösung in weniger als 4 min zur Lösung gebracht, was insbesondere durch eine entsprechend höhere Temperatur im Extruder ermöglicht wird.

Die höhere Temperatur im Extruder ist jedoch nur dann möglich, wenn die Spinnlösung bereits einen Stabilisator enthält. Für Spinnlösungsgemische ohne Stabilisator wird ein Temperaturbereich von 90° bis 110°C im Extruder bevorzugt.

Die erfindungsgemäßen Dialysemembranen weisen eine hohe dialytische Permeabilität im sogenannten mittelmolekularen Bereich (500 – 5000 g/mol) auf, der durch die Vitamin-B12-Clearance als Testmolekül ausgedrückt wird. Diese hohe dialytische Permeabilität bleibt auch dann im wesentlichen erhalten, wenn durch eine Nachbehandlung die hydraulische Permeabilität für Wasser ( = Ultrafiltrationsleistung) drastisch auf den für die Hämodialyse optimalen Wert gesenkt wird.

Durchgeführt wird diese Nachbehandlung in der Weise, daß die erhaltene Dialysemembran vor dem Zusatz von Weichmachern in wasserhaltigen Flüssigkeiten 5 bis 50 min, vorzugsweise 10 bis 20 min, bei Temperaturen von 50° bis 105°C, vorzugsweise 60° bis 80°C, behandelt wird.

Als wasserhaltige Flüssigkeit werden neben Wasser als solchem eine 75gew.-%ige bis 85gew.-%ige wäßrige Hydrazinlösung oder ein Gemisch aus Wasser und/oder einwertigen Alkoholen mit 1–3 C-Atomen und Glyzerin bevorzugt.

Als Mischorgan, mit dem besonders günstige kurze Verweilzeiten zum Mischen der Spinnlösung zu einer homogenen entgasten Lösung erreicht wurden, hat sich ein Doppelschneckenextruder mit Entgasungszone besonders bewährt. Vorzugsweise weisen die Schnecken im Doppelschneckenextruder gleiche Drehrichtung auf.

Anhand der nachfolgenden Beispiele wird die Erfindung näher erläutert.

## Beispiel 1

In einen Doppelschneckenextruder mit Entgasungszone und gleichlaufender Schnecke wird über eine Dosierdoppelschnecke kontinuierlich mit einer Menge von 36 g/min einer Mischung aus 20 Gew.-% Buchensulfitcellulose mit einem mittleren Polymerisationsgrad von 795 Anhydroglukoseeinheiten (Gewichtsmittel), 68 Gew.-% N-Methylmorpholin-N-oxid und 12 Gew.-% Wasser zugeführt. Der Extruder war auf 100°C (ausgenommen Einzugszone) beheizt. In der Entgasungszone wird bei 10 mbar das Gemisch entgast, wobei Luft und ein Teil des Wassers entfernt werden. Nach 4 min Verweilzeit im Extruder wurde die erhaltene klare Lösung filtriert und mittels einer Meßpumpe einer Spinndüse zugeführt. Die Düse mit einer Schlitzbreite von 180 mm und einer Spalteinstellung von 600 µm war auf 130° beheizt und war in einem Abstand von 10 mm über der Fällbadoberfläche angeordnet. Als Fällbad diente Wasser von 20°C. Bei einer Abzugsgeschwindigkeit von 4 m/min und einer Verweilzeit im Fällbad von 2,5 min wurde die Membran ausgefällt, gewaschen und nach Tauchen in einem Weichmacherbad, dessen Zusammensetzung 35 Gew.-% Glycerin, 45 Gew.-% Äthanol und 20 Gew.-% Wasser betrug, und Abpressen in einem Duo in einem Bandtrockner bei einer Kammertemperatur von 65°C unter Schrumpfbehinderung getrocknet und aufgewickelt. Die so erhaltene Membran war transparent und hatte folgende Dialyseeigenschaften:

$$UFL = 3,2 \times 10^{-4} \left[ \frac{ml}{min\ N} \right],$$

$$DL\ (Vitamin\ B\ 12) = 3,9 \times 10^{-3} \left[ \frac{cm}{min} \right]$$

(wobei:   UFL = Ultrafiltrationsleistung,
DL (Vitamin B 12) = Dialytische Permeabilität für Vitamin B 12, gemessen bei 20°C)

Die Bruchlast nach DIN 53 455 beträgt in Längsrichtung 1836 cN, die Bruchdehnung 25,9%. Die Dicke der Membran im trockenen Zustand beträgt 13 µm, der Wassergehalt 7,9%, der Glyceringehalt 25%.

## Beispiel 2

In analoger Weise wurde eine Spinnlösung mit einem Cellulosegehalt von 14% zu einer Membran verarbeitet. Die getrocknete Membran ergab folgende Werte:

$$UFL = 6,3 \times 10^{-4} \left[ \frac{ml}{min\ N} \right],$$

$$DL\ Vit\ B\ 12 = 6,1 \times 10^{-3} \left[ \frac{cm}{min} \right]$$

4

$$\text{DL Harnstoff} = 37,3 \times 10^{-3} \left[\frac{\text{cm}}{\text{min}}\right]$$
$$\text{Dicke} = 13\,\mu\text{m}$$

Bruchlast       längs = 1600 cN   quer = 500 cN
Bruchdehnung längs = 23%      quer = 140%
           Wassergehalt = 8 Gew.-%
           Glyceringehalt = 22 Gew.-%

### Beispiel 3

Anstelle der Breitschlitzdüse wurde eine kern-mantelsymmetrische beheizbare Bikomponentendüse eingesetzt. Der Außendurchmesser der Düsenbohrung betrug 1100 µm, die Kernnadel einen von 700 µm. Als hohlraumbildende Flüssigkeit diente ein Paraffinöl (Primol® 340, Esso AG). Die Spinnlösung hatte eine Cellulosekonzentration von 22%. Bei einer Fördermenge von 1,8 $\left[\frac{\text{g}}{\text{min}}\right]$ pro Spinndüse und einem Abzug von 15 $\left[\frac{\text{m}}{\text{min}}\right]$ wurden Hohlfäden von 300 µm Außendurchmesser und 20 µm Wandstärke erhalten. Nach Entfernen der Innenflüssigkeit mit Methylenchlorid und Trockenblasen wurde der Hohlfaden auf seine dialytischen Eigenschaften hin untersucht:
Gemessen wurde die Ultrafiltrationsrate und wegen der besseren Vergleichbarkeit auf Ultrafiltrationsleistung umgerechnet.

Die UFR (bei 20°C gemessen) beträgt 3,5 $\left[\frac{\text{ml}}{\text{m}^2\,\text{h Torr}}\right]$, das entspricht einer

$$\text{UFL} = 4,3 \times 10^{-4} \left[\frac{\text{ml}}{\text{min N}}\right],$$

$$\text{DL Vit B 12} = 5,5 \times 10^{-3} \left[\frac{\text{cm}}{\text{min}}\right].$$

### Beispiel 4

Eine analog dem Beispiel 1 hergestellte Membran wurde vor dem Weichmacherzusatz 12 min bei 75°C mit Wasser nachbehandelt und anschließend in üblicher Weise mit Weichmacher versehen und getrocknet. Dadurch wurde eine praktisch nicht mehr meßbare UFL bei einer gleichzeitigen

$$\text{DL Vit B 12} = 2,6 \times 10^{-3} \left[\frac{\text{cm}}{\text{min}}\right]$$

gemessen.

## Patentansprüche

1. Verfahren zur Herstellung einer Dialysemembran aus regenerierter Cellulose in Form von Flachfolien, Schlauchfolien oder Hohlfäden, dadurch gekennzeichnet, daß ein Gemisch aus 7 Gew.-% bis 25 Gew.-% Cellulose, 93 Gew.-% bis 50 Gew.-% tertiärem Aminoxid, gegebenenfalls bis 25 Gew.-% einem die Cellulose nicht lösenden Verdünnungsmittel und bis zu 10 Gew.-% üblichen Zusätzen, jeweils bezogen auf das Gewicht der Spinnlösung, in einem Mischorgan in weniger als 8 min und bei Temperaturen zwischen 80° und 150°C zur Lösung gebracht wird, daß man die Lösung entgast, durch eine Breitschlitzdüse, Ringschlitzdüse oder Hohlfadendüse in ein Fällbad extrudiert, wäscht und nach Zusatz von Weichmacher unter Schrumpfbehinderung bei Temperaturen zwischen 50° und 110°C trocknet und aufwickelt.

2. Verfahren nach Anspruch 1, dadurch gekennzeichnet, daß das Fällbad eine mit dem tertiären Aminoxid mischbare Flüssigkeit oder Lösung ist.

3. Verfahren nach Anspruch 2, dadurch gekennzeichnet, daß der überwiegende Anteil der Flüssigkeit oder Lösung, Wasser, ein- oder mehrwertiger Alkohol, Keton oder Amin oder ein Gemisch aus diesen ist.

4. Verfahren nach den Ansprüchen 1 bis 3, dadurch gekennzeichnet, daß das Fällbad 1,0 Gew.-% bis 25 Gew.-% tertiäres Aminoxid enthält.

5. Verfahren nach den Ansprüchen 1 bis 4, dadurch gekennzeichnet, daß die Spinnlösung als Zusatz einen Stabilisator enthält.

6. Verfahren nach den Ansprüchen 1 bis 5, dadurch gekennzeichnet, daß die Spinnlösung als Zusatz einen Weichmacher enthält.

7. Verfahren nach den Ansprüchen 1 bis 6, dadurch gekennzeichnet, daß das Gemisch für die Spinnlösung in weniger als 4 min zur Lösung gebracht wird.

8. Verfahren nach den Ansprüchen 1 bis 7, dadurch gekennzeichnet, daß das Gemisch für die Spinnlösung bei Temperaturen zwischen 90° bis 110°C zur Lösung gebracht wird.

9. Verfahren nach den Ansprüchen 1 bis 8, dadurch gekennzeichnet, daß die erhaltene Dialysemembran vor dem Zusatz von Weichmacher in wasserhaltigen Flüssigkeiten 5 bis 50 min bei Temperaturen von 50° bis 105°C behandelt wird.

10. Verfahren nach Anspruch 9, dadurch gekennzeichnet, daß als wasserhaltige Flüssigkeit eine 75gew.-%ige bis 85gew.-%ige wäßrige Hydrazinlösung eingesetzt wird.

11. Verfahren nach Anspruch 9, dadurch gekennzeichnet, daß als wasserhaltige Flüssigkeit ein Gemisch aus Wasser und/oder einwertigen Alkoholen mit 1 bis 3 C-Atomen und Glycerin eingesetzt wird.

12. Verfahren nach Anspruch 11, dadurch gekennzeichnet, daß die wasserhaltige Flüssigkeit 10 Gew.-% bis 40 Gew.-% Glycerin enthält.

13. Verfahren nach den Ansprüchen 9 bis 12, dadurch gekennzeichnet, daß die Behandlung bei Temperaturen von 60° bis 80°C durchgeführt wird.

14. Verfahren nach den Ansprüchen 9 bis 13, dadurch gekennzeichnet, daß die Behandlungsdauer 10 bis 20 min beträgt.

15. Verfahren nach den Ansprüchen 1 bis 14, dadurch gekennzeichnet, daß als Mischorgan ein Doppelschneckenextruder mit Entgasungszone eingesetzt wird.

16. Verfahren nach Anspruch 15, dadurch gekennzeichnet, daß die Schnecken im Doppelschneckenextruder gleiche Drehrichtung aufweisen.

17. Verfahren nach den Ansprüchen 1 bis 16, dadurch gekennzeichnet, daß die Cellulose ganz oder teilweise aus substituierter Cellulose besteht.

18. Verfahren nach Anspruch 17, dadurch gekennzeichnet, daß der Substitutionsgrad der substituierten Cellulose 0,1 bis 0,7 beträgt.

## Claims

1. A process for the production of a dialysis membrane of regenerated cellulose in the form of flat flims, tubular films or hollow filaments, characterized in that a mixture of from 7 to 25% by weight of cellulose, from 93 to 50% by weight of tertiary amine oxide, optionally up to 25% by weight of a diluent which does not dissolve the cellulose and up to 10% by weight of standard additives, based in each case on the weight of the spinning solution, is dissolved in less than 8 minutes at temperatures of from 80 to 150°C in a mixing unit, in that the solution is degassed, extruded through a wide slot die, annular slot die or hollow filament die into a precipitation bath, washed and, after the addition of plasticizer, is dried without shrinkage at temperatures of from 50 to 110°C and wound into roll form.

2. A process as claimed in Claim 1, characterized in that the precipitation bath is a liquid or solution miscible with the tertiary amine oxide.

3. A process as claimed in Claim 2, characterized in that the liquid or solution is predominantly water, a mono- or polyhydric alcohol, ketone or amine or a mixture thereof.

4. A process as claimed in Claims 1 to 3, characterized in that the precipitation bath contains from 1.0 to 25% by weight of tertiary amine oxide.

5. A process as claimed in Claims 1 to 4, characterized in that the spinning solution contains a stabilizer as additive.

6. A process as claimed in Claims 1 to 5, characterized in that the spinning solution contains a plasticizer as additive.

7. A process as claimed in Claims 1 to 6, characterized in that the mixture for the spinning solution is dissolved in less than 4 minutes.

8. A process as claimed in Claims 1 to 7, characterized in that the mixture for the spinning solution is dissolved at temperatures of from 90 to 110°C.

9. A process as claimed in Claims 1 to 8, characterized in that, before the addition of plasticizer, the dialysis membrane obtained is treated in aqueous liquids for 5 to 50 minutes at temperatures in the range from 50 to 105°C.

10. A process as claimed in Claim 9, characterized in that a 75% by weight to 85% by weight aqueous hydrazine solution is used as the aqueous liquid.

11. A process as claimed in Claim 9, characterized in that a mixture of water and/or monohydric alcohols containing from 1 to 3 carbon atoms and glycerol is used as aqueous liquid.

12. A process as claimed in Claim 11, characterized in that the aqueous liquid contains from 10 to 40% by weight of glycerol.

13. A process as claimed in Claims 9 to 12, characterized in that the treatment is carried out at temperatures in the range from 60 to 80°C.

14. A process as claimed in Claims 9 to 13, characterized in that the treatment time is 10 to 20 minutes.

15. A process as claimed in Claims 1 to 14, characterized in that a twin screw extruder with a venting zone is used as the mixing unit.

16. A process as claimed in Claim 15, characterized in that the screws of the twin screw extruder rotate in the same direction.

17. A process as claimed in Claims 1 to 16, characterized in that the cellulose consists completely or partly of substituted cellulose.

18. A process as claimed in Claim 17, characterized in that the degree of substitution of the substituted cellulose amounts to between 0.1 and 0.7.

**Revendications**

1. Procédé de préparation d'une membrane de dialyse en cellylose régénérée sous forme de feuilles obtenues à plat, de gaines soufflées ou de fibres creuses, caractérisé par le fait que dans un appareil mélangeur et en moins de huit minutes à des températures comprises entre 80°C et 150°C, un mélange de 7% en poids à 25% en poids de cellulose, 93% en poids à 50% en poids d'un oxyde d'amine tertiaire, éventuellement jusqu'à 25% en poids d'un diluant ne dissolvant pas la cellulose et jusqu'à 10% en poids d'adjuvants courants, respectivement calculés par rapport au poids de la solution de filage, est mis en solution, qu'on dégaze la solution, qu'on l'extrude dans un bain de précipitation à travers une filière à fente large, une filière à fente annulaire ou une filière pour fibres creuses, qu'on lave le produit d'extrusion et après addition d'un plastifiant, qu'on le sèche tout en empêchant le retrait à des températures entre 50°C et 110°C, puis qu'on l'enroule.

2. Procédé selon la revendication 1, caractérisé par le fait que le bain de précipitation est un liquide ou une solution miscible avec l'oxyde d'amine tertiaire.

3. Procédé selon la revendication 2, caractérisé par le fait que la proportion principale du liquide ou de la solution est constituée par de l'eau, un mono-alcool ou un polyol, une cétone ou une amine ou l'un de leurs mélanges.

4. Procédé selon l'une quelconque des revendications 1 à 3, caractérisé par le fait que le bain de précipitation contient 1,0% en poids à 25% en poids d'oxyde d'amine tertiaire.

5. Procédé selon l'une quelconque des revendications 1 à 4, caractérisé par le fait que la solution de filage contient comme adjuvant un stabilisant.

6. Procédé selon l'une quelconque des revendications 1 à 5, caractérisé par le fait que la solution de filage contient comme adjuvant un plastifiant.

7. Procédé selon l'une quelconque des revendications 1 à 6, caractérisé par le fait que le mélange destiné à la solution de filage est amené en solution en moins de quatre minutes.

8. Procédé selon l'une quelconque des revendications 1 à 7, caractérisé par le fait que le mélange destiné à la solution de filage est amené en solution à des températures comprises entre 90−110°C.

9. Procédé selon l'une quelconque des revendications 1 à 8, caractérisé par le fait que l'on traite la membrane de dialyse obtenue avant l'addition du plastifiant, dans des liquides aqueux pendant 5 à 50 minutes à des températures de 50°C à 105°C.

10. Procédé selon la revendication 9, caractérisé par le fait que l'on utilise comme liquide aqueux une solution aqueuse d'hydrazine ayant une concentration de 75% en poids à 85% en poids.

11. Procédé selon la revendication 9, caractérisé par le fait que l'on utilise comme liquide aqueux, un mélange d'eau et/ou de mono-alcools ayant de 1 à 3 atomes de carbone et de glycérine.

12. Procédé selon la revendication 11, caractérisé par le fait que le liquide aqueux contient 10% en poids à 40% en poids de glycérine.

13. Procédé selon l'une quelconque des revendications 9 à 12, caractérisé par le fait que l'on effectue le traitement à des températures de 60°C à 80°C.

14. Procédé selon l'une quelconque des revendications 9 à 13, caractérisé par le fait que la durée du traitement s'élève de 10 à 20 minutes.

15. Procédé selon l'une quelconque des revendications 1 à 14, caractérisé par le fait que l'on utilise comme appareil mélangeur une extrudeuse à double vis comportant une zone de dégazage.

16. Procédé selon la revendication 15, caractérisé par le fait que les vis de l'extrudeuse à double vis présentent le même sens de rotation.

17. Procédé selon l'une quelconque des revendications 1 à 16, caractérisé par le fait que la cellulose est constituée en totalité ou partiellement par une cellulose substituée.

18. Procédé selon la revendication 17, caractérisé par le fait que le degré de substitution de la cellulose substituée s'élève de 0,1 à 0,7.